# EUROPEAN PATENT SPECIFICATION

(11) **EP 2 635 010 B1**
(45) Date of publication and mention of the grant of the patent: **29.10.2014**
(21) Application number: 13001052.3
(22) Date of filing: 01.03.2013
(51) Int. Cl.: H04M 1/725

(54) **Method of handling local emergeny number list and related communiction device**
Verfahren zur Handhabung einer örtlichen Notrufnummernliste und dazugehörige Kommunikationsvorrichtung
Procédé de gestion de liste locale de numéros de secours et dispositif de communication associé

(30) Priority: 02.03.2012 US 201261605765 P; 27.02.2013 US 201313778146
(43) Date of publication of application: 04.09.2013
(73) Proprietor: HTC Corporation, Taoyuan County 330 (TW)
(72) Inventor: Tiwari, Kundan, 330 Taoyuan City, Taoyuan County (TW)
(74) Representative: Klang, Alexander H.

(56) References cited:
- US-A1- 2006 172 720
- US-A1- 2008 200 142

## Description

### Background of the Invention

### 1. Field of the Invention

The present invention relates to a method used in a wireless communication system and related communication device, and more particularly, to a method of handling a local emergency number list and related communication device.

A similar method is disclosed by the document US2008/200142 'Emergency number selection for mobile communications' - Research Motion, Abdel-Kader Sherif, published on 21 August 2008.

### 2. Description of the Prior Art

The 3rd Generation Partnership Project (3GPP) has developed a universal mobile telecommunications system (UMTS) which adopts a wideband code division multiple access (WCDMA) as a wireless air interface. In the UMTS, a radio access network known as a universal terrestrial radio access network (UTRAN) includes multiple Node-Bs (NBs) for communicating with multiple user equipments (UEs) (i.e., mobile stations (MSs)). As a successor of a General Packet Radio Service (GPRS) system, the UMTS provides high frequency spectrum utilization, universal coverage, and high-speed multimedia data transmission which are beneficial for the UEs and the NBs of the UMTS.

A long-term evolution (LTE) system supporting the 3GPP Rel-8 standard and/or the 3GPP Rel-9 standard are developed by the 3GPP as a successor of the UMTS, for further enhancing performance of the UMTS to satisfy increasing needs of users. The LTE system includes a new radio interface and a new radio network architecture that provides a high data rate, low latency, packet optimization, and improved system capacity and coverage. In the LTE system, a radio access network known as an evolved UTRAN (E-UTRAN) includes multiple evolved Node-Bs (eNBs) for communicating with multiple UEs, and communicating with a core network including a mobility management entity (MME), a serving gateway, etc., for Non-Access Stratum (NAS) control.

On the other hand, there may be situations (e.g., natural disaster, car accident, robbery, etc.) where a user needs to input and dial an emergency number in a local emergency number list via the UE, to ask for help. However, the local emergency number list received from a first network with a mobility country code (MCC) is not valid according to the prior art, when the UE is in a coverage of a second network with a different MCC. That is, even if the first network and the second network are managed by the same network operator, the UE determines that the local emergency number list is not valid, e.g., emergency numbers in the local emergency number list are determined as normal numbers, when the MCCs of the networks are different. The situation may occur in countries such as India, United States, etc., where a network operator may manage networks with different MCCs. As a result, the user cannot input and dial the emergency number, when the UE enters the coverage of the second network and the UE has not received a new local emergency number list from the second network. Thus, handling the emergency number list when the UE moves between the networks with different MCCs is an important topic to be discussed.

### Summary of the Invention

The present invention therefore provides a method and related communication device for handling a local emergency number list to solve the abovementioned problem.

A method of handling a local emergency number list for a communication device in a wireless communication system is disclosed. The method comprises receiving the local emergency number list transmitted by a first network with a first mobility country code (MCC) in the wireless communication system; and determining that the local emergency number list is valid when the communication device is in a coverage of a second network with a second MCC in the wireless communication system, if the first network and the second network are in a same country.

These and other objectives of the present invention will no doubt become obvious to those of ordinary skill in the art after reading the following detailed description of the preferred embodiment that is illustrated in the various figures and drawings.

### Brief Description of the Drawings

Fig. 1 is a schematic diagram of a wireless communication system according to an example the present invention.
Fig. 2 is a schematic diagram of a communication device according to an example to the present invention.
Fig. 3 is a flowchart of a process according to an example of the present invention.

### Detailed Description

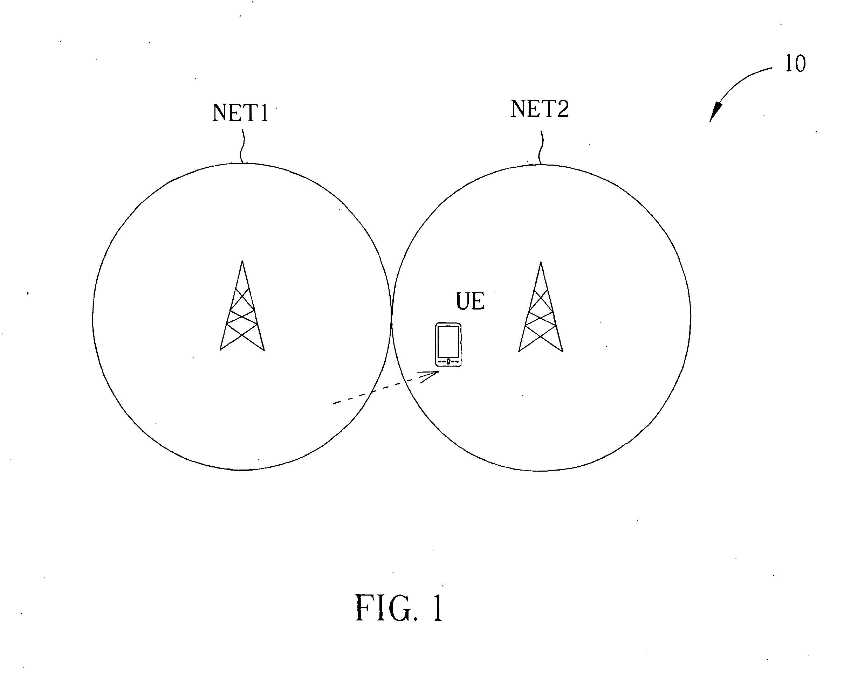

Please refer to Fig. 1, which is a schematic diagram of a wireless communication system 10 according to an example of the present invention. The wireless communication system 10 is briefly composed of a UE, networks NET1 and NET2, wherein the networks NET1 and NET2 are configured with different mobility country codes (MCCs), respectively. The wireless communication system 10 may be a time division multiple access (TDMA) system such as a global system for mobile communications (GSM) system, a general packet radio service (GPRS) system or an enhanced data rates for GSM evolution (EDGE) system. Alternatively, the wireless communication system 10 may be a wideband code division multiple access (WCDMA) system such as a universal mobile telecommunications system (UMTS). Besides, the wireless communication system 10 may be an orthogonal frequency division multiplexing (OFDM) system and/or an orthogonal frequency division multiple access (OFDMA) system, such as a long term evolution (LTE) system (e.g., 3GPP Rel-8/9/10 standard), a LTE-Advanced (LTE-A) system (e.g., 3GPP Rel-11 standard) or a successor of the LTE-A system. The wireless communication system 10 may also be a system supporting a combination of the abovementioned systems, and is not limited herein. That is, the networks NET1 and NET2 support multiple standards, and can provide various services to the UE.

Please note that, the UE, the networks NET1 and NET2 are simply utilized for illustrating a structure of the wireless communication system 10. Practically, a network (the network NET1 or NET2) can be referred to one or more base stations (BSs) in the GSM system, the GPRS system or the EDGE system. Alternatively, the network can also be referred to as a universal terrestrial radio access network (UTRAN) comprising one or more NodeBs (NBs) in the UMTS, or an evolved UTRAN (E-UTRAN) comprising one or more evolved NodeBs (eNBs), relay nodes and/or remote radio heads (RRHs) in the LTE system or the LTE-A system, and are not limited herein. Each of the BSs, the NBs, the eNBs, the relay nodes and/or the RRHs can provide one or more cells (i.e., coverage) to the UE. The UE can be a mobile device such as a mobile phone, a laptop, a tablet computer, an electronic book or a portable computer system. Furthermore, the network may further include a mobile switching center (MSC), a serving GPRS support node (SGSN) and/or a core network (e.g., mobility management entity (MME)), for communicating with the UE. In another example, the network can also be referred to a public land mobile network (PLMN). Besides, the network and the UE can be seen as a transmitter or a receiver according to transmission directions, e.g., for an uplink (UL), the UE is the transmitter and the network is the receiver, and for a downlink (DL), the network is the transmitter and the UE is the receiver.

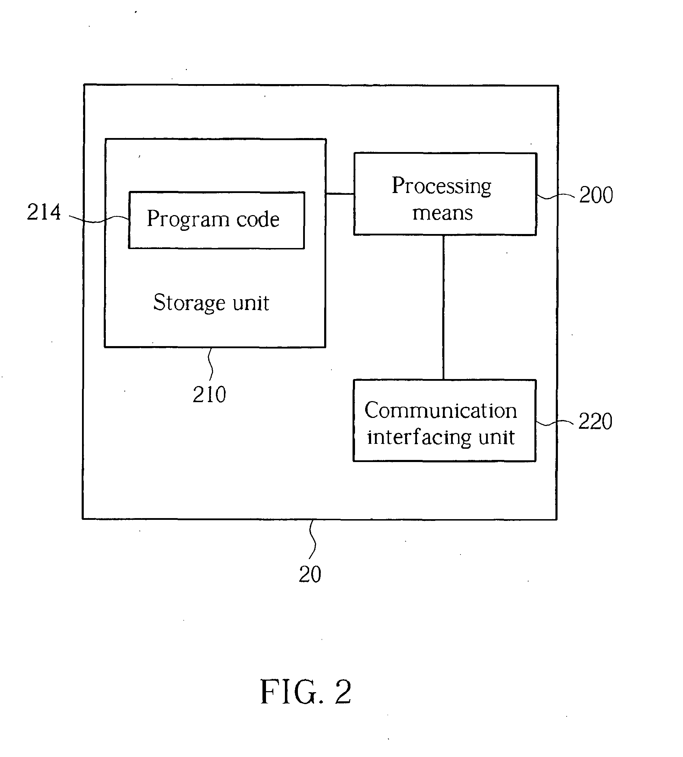

Please refer to Fig. 2, which is a schematic diagram of a communication device 20 according to an example of the present invention. The communication device 20 can be the UE, the network NET1 and/or the network NET2 shown in Fig. 1, but is not limited herein. The communication device 20 may include a processing means 200 such as a microprocessor or an Application Specific Integrated Circuit (ASIC), a storage unit 210 and a communication interfacing unit 220. The storage unit 210 may be any data storage device that can store a program code 214, accessed by the processing means 200. Examples of the storage unit 210 include but are not limited to a subscriber identity module (SIM), read-only memory (ROM), flash memory, random-access memory (RAM), CD-ROM/DVD-ROM, magnetic tape, hard disk, and optical data storage device. The communication interfacing unit 220 is preferably a radio transceiver, and can transmit and receive wireless signals according to processing results of the processing means 200.

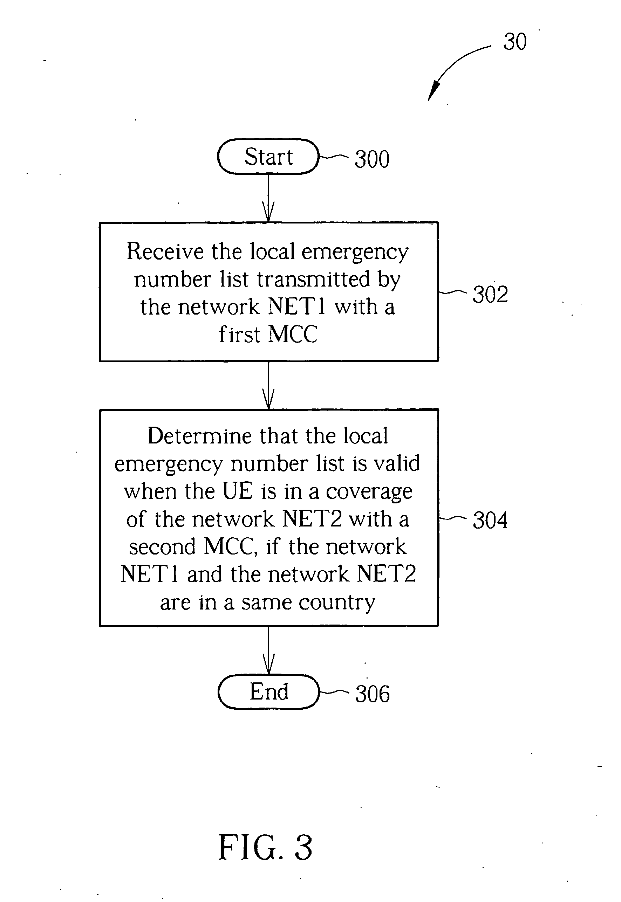

Please refer to Fig. 3, which is a flowchart of a process 30 according to an example of the present invention. The process 30 is utilized in the UE shown in Fig. 1, for handling a local emergency number list in the UE. The process 30 may be compiled into the program code 214 and includes the following steps:
Step 300: Start.
Step 302: Receive the local emergency number list transmitted by the network NET1 with a first MCC.
Step 304: Determine that the local emergency number list is valid when the UE is in a coverage of the network NET2 with a second MCC, if the network NET1 and the network NET2 are in a same country.
Step 306: End.

According to the process 30, after receiving the local emergency number list transmitted by the network NET1 with a first MCC, the UE stores the local emergency number list, wherein one or more emergency numbers are in the local emergency number list. When the UE is in a coverage of the network NET2 with a second MCC, the UE determines that the local emergency number list is valid if the network NET1 and the network NET2 are in a same country. In other words, after the UE enters the coverage of the network NET2, the UE will determine the local emergency number list as valid even if the MCCs of the network NET1 and the network NET2 are different. Thus, if the UE receives a number input by a user, the UE determines the number as an emergency number, if the local emergency number list is determined valid and the number is in the local emergency number list. As a result, the user can still input and dial an emergency number in the local emergency number list via the UE, before the network NET2 transmits a new local emergency number list to the UE to replace the local emergency number list.

Please note that, a method according to which the UE determines whether the network NET1 and the network NET2 are in the same country is not limited. For example, the UE can determine that the network NET1 and the network NET2 are in the same country, if the network NET1 and the network NET2 are managed by a same network operator. Besides, a time interval during which the UE receives the local emergency number list is not limited. For example, the UE may receive the local emergency number list transmitted by the network NET1 during a registration procedure. Further, the network NET1 may transmit a location updating accepting message or an attach accept message including the local emergency number list to the UE during the registration procedure, to configure or update the local emergency number list.

Those skilled in the art should readily make combinations, modifications and/or alterations on the abovementioned description and examples. The abovementioned steps of the processes including suggested steps can be realized by means that could be a hardware, a firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include a system on chip (SOC), system in package (SiP), a computer on module (COM), and the communication device 20.

To sum up, the present invention provides a method for handling a local emergency number list in a UE. The UE determines the local emergency number list as valid according to the present invention, even if the UE enters a network with a different MCC. Thus, a user can still input and dial an emergency number in the local emergency number list via the UE, and inconvenience caused by the prior art is solved.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method of handling a local emergency number list for a communication device in a wireless communication system, the method comprising:
receiving the local emergency number list transmitted by a first network with a first mobility country code, MCC, in the wireless communication system; and
determining that the local emergency number list is valid when the communication device is in a coverage of a second network with a second MCC in the wireless communication system, if the first network and the second network are in a same country.

2. The method of claim 1, further comprising:
receiving a number inputted by a user; and
determining the number as an emergency number, if the local emergency number list is determined valid and the number is in the local emergency number list.

3. The method of claim 1, wherein the communication device determines that the first network and the second network are in the same country, if the first network and the second network are managed by a same network operator.

4. The method of claim 1, wherein the communication device receives the local emergency number list transmitted by the first network during a registration procedure.

5. The method of claim 4, wherein the local emergency number list is comprised in a location updating accepting message transmitted by the first network.

6. The method of claim 4, wherein the local emergency number list is comprised in an attach accept message transmitted by the first network.

## Patentansprüche

1. Ein Verfahren zum Gebrauch einer lokalen Notfallnummernliste für ein Kommunikationsgerät in einem drahtlosen Kommunikationssystem, wobei das Verfahren Folgendes aufweist:
Empfangen der lokalen Notfallnummernliste, die durch ein erstes Netzwerk mit einem ersten Mobilitätsländercode, auch MCC = Mobility Country Code, in dem drahtlosen Kommunikationssystem übertragen wurde; und
Bestimmen, dass die lokale Notfallnummernliste gültig ist, wenn sich das Kommunikationsgerät in einer Reichweite eines zweiten Netzwerks mit einer zweiten MCC in dem drahtlosen Kommunikationssystem befindet; und zwar wenn sich das erste Netzwerk und das zweite Netzwerk in einem gleichen Land befinden.

2. Verfahren nach Anspruch 1, das ferner Folgendes aufweist:
Empfangen einer Nummer, die durch einen Nutzer eingegeben wurde; und
Bestimmen, dass die Nummer eine Notfallnummer ist, wenn die lokale Notfallnummernliste als gültig bestimmt wurde und die Nummer sich in der lokalen Notfallnummernliste befindet.

3. Verfahren nach Anspruch 1, wobei das Kommunikationsgerät bestimmt, dass sich das erste Netzwerk und das zweite Netzwerk in dem gleichen Land befinden, wenn das erste Netzwerk und das zweite Netzwerk durch den gleichen Netzwerkbetreiber verwaltet werden.

4. Verfahren nach Anspruch 1, wobei das Kommunikationsgerät die lokale Notfallnummernliste, die durch das erste Netzwerk übertragen wurde, während einer Registrierungsprozedur empfängt.

5. Verfahren nach Anspruch 4, wobei die lokale Notfallnummernliste in einer Ortsaktualisierungsannahmenachricht, auch Location Updateing Accepting Message, enthalten ist, die durch das erste Netzwerk übertragen wurde.

6. Verfahren nach Anspruch 4, wobei die lokale Notfallnummernliste in einer Anfügungsannahmenachricht, auch Attach Accept Message, enthalten ist, die durch das erste Netzwerk übertragen wurde.

## Revendications

1. Procédé pour gérer une liste locale de numéros d'urgence pour un dispositif de communication dans un système de communication sans fil, le procédé comprenant :
recevoir la liste locale de numéros d'urgence transmise par un premier réseau avec un premier code de pays de mobilité, MCC, dans le système de communication sans fil ; et
déterminer que la liste locale de numéros d'urgence est valide lorsque le dispositif de communication est dans une zone de couverture d'un deuxième réseau avec un deuxième MCC dans le système de communication sans fil, si le premier réseau et le deuxième réseau sont dans le même pays.

2. Procédé selon la revendication 1, comprenant en outre :
recevoir un numéro introduit par un utilisateur ; et
déterminer que le numéro est un numéro d'urgence si la liste locale de numéros d'urgence est déterminée comme valide et le numéro est dans la liste locale de numéros d'urgence.

3. Procédé selon la revendication 1, dans lequel le dispositif de communication détermine que le premier réseau et le deuxième réseau sont dans le même pays si le premier réseau et le deuxième réseau sont gérés par un même opérateur de réseau.

4. Procédé selon la revendication 1, dans lequel le dispositif de communication reçoit la liste locale de numéros d'urgence transmise par le premier réseau pendant une procédure d'enregistrement.

5. Procédé selon la revendication 4, dans lequel la liste locale de numéros d'urgence est comprise dans un message d'acceptation de mise à jour de position transmis par le premier réseau.

6. Procédé selon la revendication 4, dans lequel la liste locale de numéros d'urgence est comprise dans un message d'acceptation d'attachement transmis par le premier réseau.
